# EUROPÄISCHE PATENTANMELDUNG

(11) **EP 0 965 503 A2**
(43) Veröffentlichungstag der Anmeldung: **22.12.1999**
(21) Anmeldenummer: 99108105.0
(22) Anmeldetag: 24.04.1999
(51) Int. Cl.: B60R 22/24

(54) **Gurthöhenverstellvorrichtung mit Geräuschdämpfung**

(30) Priorität: 20.05.1998 DE 19822696
(71) Anmelder: Volkswagen Aktiengesellschaft, 38436 Wolfsburg (DE)
(72) Erfinder: Schwant, Wilfried, 38536 Meinersen (DE)

(57) **Zusammenfassung**

Die vorliegende Erfindung betrifft eine Vorrichtung (2) zur stufenweisen Höhenverstellung eines Halte- oder Umlenkbeschlags (18) eines Sicherheitsgurts (20) an einem hohlen Karosserieteil eines Kraftfahrzeugs, insbesondere an einer B- oder C-Säule (8), mit einer ortsfest am Karosserieteil (8) angebrachten Führungsschiene (10), einem entlang der Führungsschiene (10) verschiebbaren und in definierten Verstellpositionen fixierbaren Schlitten (12) mit einer Befestigungseinrichtung (54) für den Halte- oder Umlenkbeschlag (18), sowie schalldämmendem Material zur Dämpfung von Verstellgeräuschen, das erfindungsgemäß innerhalb des hohlen Karosserieteils (8) angeordnet ist und vorzugsweise von einem Dämmschaum (70) gebildet wird, mit dem der Hohlraum (28) des hohlen Karosserieteils mindestens teilweise ausgeschäumt ist.

## Beschreibung

Die vorliegende Erfindung betrifft eine Vorrichtung zur stufenweisen Höhenverstellung eines Halte- oder Umlenkbeschlags eines Sicherheitsgurts an einem hohlen Karosserieteil eines Kraftfahrzeugs, insbesondere an einer B- oder C-Säule, mit einer ortsfest am Karosserieteil angebrachten Führungsschiene, einem entlang der Führungsschiene verschiebbaren und in definierten Verstellpositionen fixierbaren Schlitten mit einer Befestigungseinrichtung für den Halte- oder Umlenkbeschlag, sowie schalldämmendem Material zur Dämpfung von Verstellgeräuschen.

Vorrichtungen der eingangs genannten Art, die in der Regel als Gurthöhenverstellvorrichtung bezeichnet werden, dienen zur Anpassung der Höhe des Umlenk- oder Befestigungspunkts eines Sicherheitsgurts an die Körpergröße eines zu sichemden Fahrzeuginsassen. Bei viertürigen Personenkraftwagen sind die Gurthöhenverstellvorrichtungen gewöhnlich im oberen Teil der B- und C-Säule angebracht. Zum Verstellung der Höhe des Beschlags wird der Schlitten zumeist durch Druck auf eine Abdeckkappe einer den Halte- oder Umlenkbeschlag mit dem Schlitten verbindenden Schraube entgegen der Kraft einer Feder in Richtung der Säule gedrückt, um die durch gegenseitigen Rasteingriff von Rastelementen des Schlittens und der Führungsschiene bewirkte Fixierung zu lösen, damit sich der Schlitten entlang der Führungsschiene in die gewünschte Verstellposition bewegen läßt. Bei einer anschließenden Druckentlastung der Abdeckkappe treten die Rastelemente erneut in gegenseitigen Rasteingriff, so daß der Schlitten in der gewählten Verstellposition festgehalten wird.

Da die Bauteile der Gurthöhenverstellvorrichtung aus Stabilitätsgründen gewöhnlich aus Metall bestehen, treten beim Verstellen des Schlittens infolge eines Aneinandeschlagens von Teilen durch Schwingungen des Metalls verursachte metallisch klingende Geräusche auf. Da die Führungsschiene eng am Befestigungsblech anliegt, werden die Schwingungen auch auf die Säule übertragen und dort durch den als Resonanzraum wirkenden Hohlraum im Inneren der Säule verstärkt, so daß sie im Unterschied zu anderen, stark gedämpften Geräuschen des Fahrzeugs im Inneren des Fahrgastraums verhältnismäßig laut hörbar sind. Um den Geräuschpegel bei der Höhenverstellung des Umlenk- oder Haltebeschlags zu verringern, wurde in der DE 93 03 104 U1 bereits vorgeschlagen, bei einer Gurthöhenverstellvorrichtung der eingangs genannten Art zwischen der Führungsschiene und der Karosseriesäule ein Schalldämpfungs- oder richtiger Schalldämmungsmaterial anzubringen, um durch Entkopplung der Führungsschiene von der Karosseriesäule die Schallübertragung zu hemmen. Um eine gute Schalldämmung zu erzielen, muß dieses Material an sämtlichen Stellen angebracht werden, wo die Führungsschiene in unmittelbarem oder z.B. über eine Schraube in mittelbarem Kontakt mit der Karosseriesäule steht. In der Praxis bedeutet dies, daß die Führungsschiene teilweise mit dem schalldämpfenden Material beschichtet werden muß. Diese teilweise Beschichtung ist jedoch verhältnismäßig zeit- und arbeitsaufwendig, da Teile der Führungsschiene vor dem Beschichten abgedeckt werden müssen.

Bei einer weiteren aus der DE 91 11 460 U1 bekannten Gurthöhenverstellvorrichtung der eingangs genannten Art soll das Problem dadurch gelöst werden, daß das schalldämmende Material zwischen den Berührungsflächen des Schlittens und der Führungsschiene angebracht wird. Auch in diesem Fall ist aus den genannten Gründen der Zeit- und Arbeitsaufwand für die Anbringung des schalldämmenden Materials verhältnismäßig hoch. Darüberhinaus kann das schalldämmende Material nur sehr dünn aufgebracht werden, wodurch es beim Bewegen des Schiebers oder beim Anpressen desselben aufgrund einer Belastung des Umlenk- oder Haltebeschlags leicht abgerieben wird, so daß erneut Metall gegen Metall anliegt und eine Schwingungsübertragung ermöglicht.

Ausgehend hiervon liegt der Erfindung die Aufgabe zugrunde, eine Vorrichtung der eingangs genannten Art mit einfachen Mitteln dahingehend zu verbessern, daß die Geräuschentwicklung im Fahrgastraum beim Verstellen der Höhe des Umlenk- oder Haltebeschlags geringer ist.

Zur Lösung dieser Aufgabe wird erfindungsgemäß vorgeschlagen, das schalldämmende Material im Inneren des hohlen Karosserieteils anzuordnen und dieses vorzugsweise mindestens teilweise mit Dämmschaum auszuschäumen, um so zu verhindern, daß sich die Schwingungen in Form von Schallwellen durch den vom Karosserieteil umschlossenen Hohlraum fortpflanzen und durch Resonanz innerhalb dieses Hohlraums verstärkt werden.

Eine bevorzugte Ausgestaltung der Erfindung sieht vor, daß mindestens über die gesamte Länge der Führungsschiene und vorzugsweise nach oben und unten über diese hinaus der gesamte vom Karosserieteil umschlossene Öffnungsquerschnitt mit dem schalldämmenden Material gefüllt ist, wodurch nicht nur die Übertragung von Schallwellen durch den Hohlraum verhindert wird, sondern darüber hinaus durch die innige Berührung zwischen dem schalldämmenden Material und den Innenseiten der Wände des metallischen Karosserieteils auch die Fortpflanzung von Schwingungen innerhalb der Wände selbst unterdrückt werden kann. Die beste Wirkung wird erzielt, wenn das schalldämmende Material den Hohlraum im wesentlichen vollständig ausfüllt.

Um das Einbringen von schalldämmendem Material nach der Fertigstellung des Karosserieteils zu erleichtern, weist dieses vorzugsweise mindestens eine Öffnung auf, durch welche der schaumbildende Dämmstoff in den Hohlraum injiziert werden kann, wo er unter Aufschäumen erstarrt.

Im folgenden wird die Erfindung anhand eines in der Zeichnung dargestellten Ausführungsbeispiels näher erläutert. Es zeigen:
- Fig. 1:: eine auseinandergezogene perspektivische Ansicht einer erfindungsgemä ßen, an einer Türsäule angebrachten Gurthöhenverstellvorrichtung;
- Fig. 2:: eine vertikale Schnittansicht entlang der Längsmittelebene der Vorrichtung vor dem Ausschäumen des von der Türsäule umschlossenen Hohlraums;
- Fig. 3:: eine horizontale Schnittansicht entlang der Ebene III-III der Fig. 2 nach dem Ausschäumen des Hohlraums.

Die in der Zeichnung dargestellte Gurthöhenverstellvorrichtung 2 für einen Sicherheitsgurt 4 eines Personenkraftwagens besteht im wesentlichen aus einer hinter einer Türsäulenverkleidung 6 ortsfest an einer Türsäule 8 des Personenkraftwagens montierten Führungsschiene 10, einem an der Führungsschiene 10 entlang verschiebbaren und in definierten Verstellpositionen auf der Führungsschiene 10 fixierbaren Schliffen 12, einem vor der Führungsschiene 10 über einer Aussparung der Türsäulenverkleidung 6 angebrachten Schieber 14 mit einer Durchgangsöffnung 16, einem Umlenkbeschlag 18 mit einem Führungsschlitz 20 für den Sicherheitsgurt 4, sowie einer die Durchgangsöffnung 16 des Schiebers 14 durchsetzenden, mit einer Abdeckkappe 21 verkleideten Halteschraube 22 zum Befestigen des Umlenkbeschlags 18 am Schliffen 12.

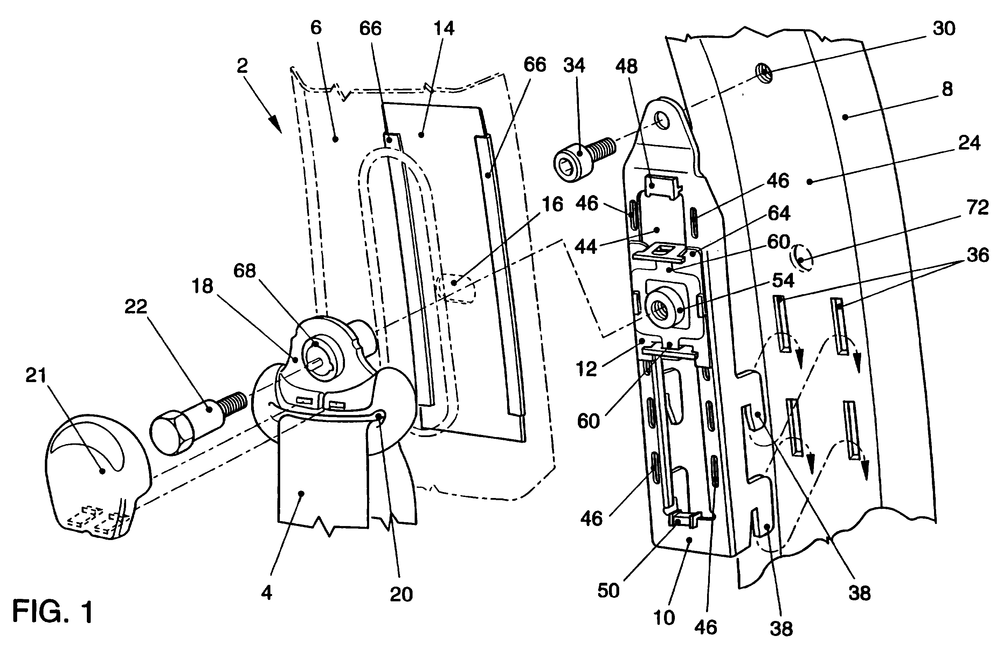

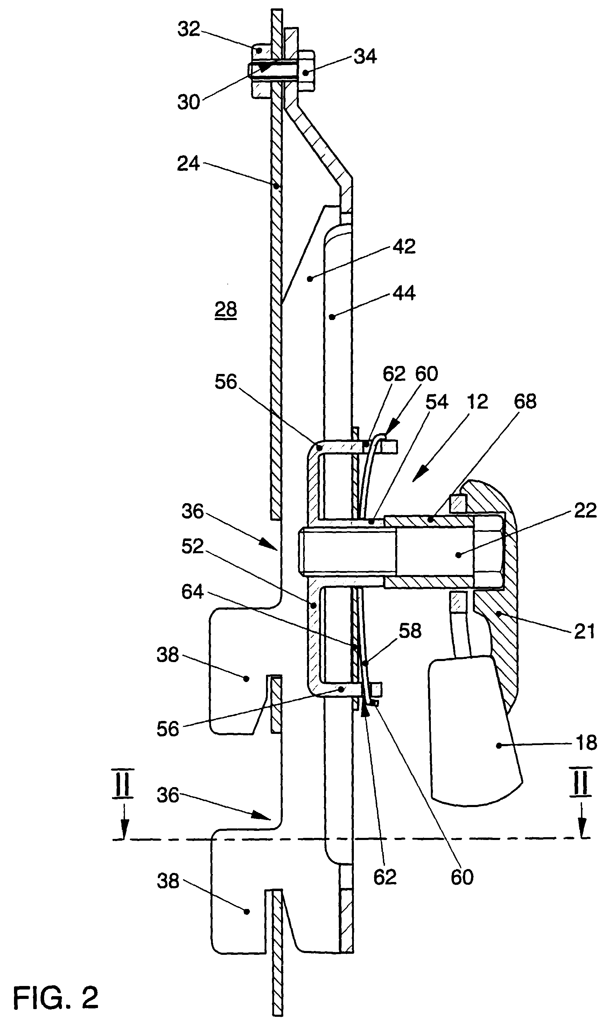

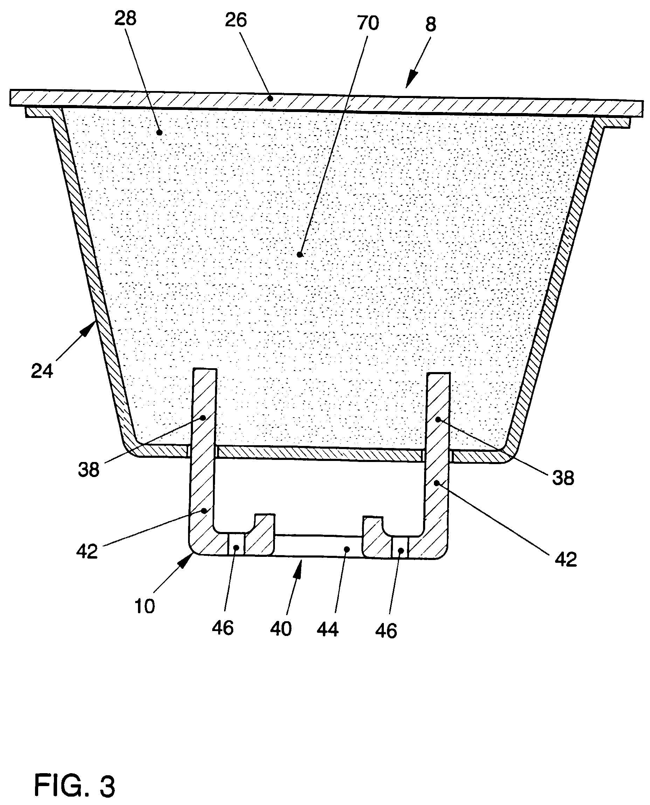

Wie am besten in Fig. 3 dargestellt, besteht das als Halterung für die Führungsschiene 10 dienende, im Querschnitt vereinfacht trapezförmig dargestellte Teilstück der Türsäule 8 aus einem rinnenförmigen Innenblech 24, dessen Schenkel 26 durch ein im wesentlichen ebenes Außenblech 26 verbunden sind, so daß die beiden Bleche 24, 26 einen geschlossenen Hohlraum 28 umschließen. Der dem Fahrgastraum zugewandte Boden des rinnenförmigen Innenblechs 24 weist im Bereich des oberen Endes der Führungsschiene 10 eine Durchgangsbohrung 30 (Fig. 1 und 2) auf, hinter der auf seiner hohlraumseitigen Oberfläche eine Schraubenmutter 32 für eine zur Befestigung der Führungsschiene 10 dienende Schraube 34 aufgeschweißt ist. Unterhalb der Durchgangsbohrung 30 weist das Innenblech 24 jeweils zwei Paare von im Abstand angeordneten schmalen vertikalen Längsschlitzen 36 auf, durch die sich jeweils eine hakenförmige Haltezunge 38 der Führungsschiene 10 einführen läßt, um die Führungsschiene 10 an der Säule 8 abzustützen, bevor sie mit der Schraube 34 vollends befestigt wird.

Wie am besten in Fig. 1 dargestellt, weist die Führungsschiene 10 einen im wesentlichen U-förmigen Querschnitt mit einem von der Türsäule 8 abgewandten Joch 40 und zwei in Richtung der Türsäule 8 überstehenden parallelen vertikalen Schenkeln 42 auf. Die Haltezungen 38 stehen in Verlängerung der Schenkel 42 über, deren freie Ränder gegen das Innenblech 24 anliegen. Das Joch 40 weist eine in Längsrichtung der Führungsschiene 10 verlaufende mittige Längsaussparung 44 sowie zwei Reihen von kleineren, hintereinander im gleichen Abstand paarweise auf beiden Seiten der Längsaussparung 44 angeordneten schlitzförmigen Durchgangsöffnungen 46 zum Verrasten des in der Längsaussparung 44 geführten Schlittens 12 auf. Zwei aus Kunststoff bestehende aufgeclipste Anschläge 48, 50 (Fig. 1) am oberen bzw. unteren Ende der Längsaussparung 44 begrenzen die Bewegung des Schlittens 12 in der höchsten bzw. niedrigsten Verstellposition, wobei der nach der Montage des Schlittens 12 angebrachte untere Anschlag gleichzeitig ein Herausrutschen des Schlittens 12 durch das erweiterte untere Einführende der Längsaussparung 44 verhindert.

Wie am besten in Fig. 2 dargestellt besteht der Schlitten 12 im wesentlichen aus einem zwischen den Schenkeln 42 des Führungsschiene 10 geführten plattenartigen Mittelteil 52 mit einem durch die Längsaussparung 44 hindurch nach vorne überstehenden zylindrischen Zapfen 54, der ein Innengewinde für die Halteschraube 22 aufweist, einer am oberen bzw. unteren Ende des Mittelteils 52 durch die Längsaussparung 44 nach vorne überstehenden Zunge 56 mit einem erweiterten freien Ende, zwei Paare von Rastnasen (in den Figuren nicht sichtbar), die an den entgegengesetzten Längsseiten des Mittelteils 52 nach vorne überstehen und von hinten her in vier Durchgangsöffnungen 46 der Führungsschiene 10 eingreifen, einer im wesentlichen quadratischen Blattfeder 58 mit einer Durchtrittsöffnung für den Zapfen 54 und mit zwei nach oben bzw. unten überstehenden Verlängerungen 60, die jeweils eine Aufnahmeöffnung 62 in den Zungen 56 durchsetzen, sowie einem unter der Blattfeder 58 angeordneten, auf den Rändern der Längsaussparung 44 aufliegenden H-förmigen Blechteil 64 mit einer oberen bzw. unteren Randaussparung für die Zungen 56. Die gegen das Blechteil 64 anliegende vorgespannte Blattfeder 58 zieht die Zungen 56 von der Türsäule 8 weg nach vorne zum Fahrgastraum hin und hält dadurch die Rastnasen in den Durchgangsöffnungen 46, aus denen sie durch Druck auf die Abdeckkappe 21 und damit auf die Halteschraube 22 und den Zapfen 54 entgegen der Kraft der Feder 58 ausgerückt werden können.

Der Schieber 14 in der Türsäulenverkleidung 6 besteht im wesentlichen aus einer dünnen rechteckigen Kunststoffplatte, die in zwei im Abstand angeordneten parallelen vertikalen Führungen 66 verschiebbar ist, so daß die Führungsschiene 10 in allen Verstellpositionen unsichtbar bleibt.

Der Umlenkbeschlag 18 weist oberhalb des Gurtführungsschlitzes 20 eine drehbar eingesetzte Hülse 68 für den Schaftteil der Halteschraube 22 auf, so daß sich der Beschlag 18 auf der drehfest mit der Halteschraube 22 verbundenen Hülse 68 verschwenken läßt.

Insbesondere dann, wenn nach einer Veränderung der Verstellposition des Schlittens 12 der Druck auf die Abdeckkappe 21 entlastet wird, um den Schlitten 12 erneut mit der Führungsschiene 10 in Rasteingriff zu bringen, werden durch das gegenseitige Anschlagen der metallischen Oberflächen des Mittelteils 52 des Schlittens 12 und der Führungsschiene 10 in diesen Teilen Schwingungen hervorgerufen, die sich als metallische Geräusche bemerkbar machen und über die Führungsschiene 10 auf die Türsäule 8 übertragen werden. Um die dadurch im Inneren des Fahrgastraums verursachten Geräusche so leise wie möglich zu halten, wird der vom Innen- und Außenblech 24, 26 umschlossene Hohlraum 28 im Inneren der Türsäule 8 ganz oder teilweise mit einem Dämmschaum 70 (Fig. 3) ausgeschäumt.

Das Ausschäumen des Hohlraums 28, beispielsweise mit einem Polyurethanschaum, kann nach der Fertigstellung und dem Einbau der Türsäule 8 erfolgen, indem durch eine später von der Führungsschiene 10 verdeckte Einspritzöffnung 72 (in Fig. 1 in strichpunktierten Linien dargestellt) im Innenblech 24 eine Mischung von Polyisocyanaten und mehrwertigen Alkoholen in den Hohlraum 28 eingespritzt wird, wo sich dann der Dämmschaum 70 bildet, der nach seinem Aushärten mindestens über die Länge der Führungsschiene 10, und vorzugsweise auf beiden Seiten, d.h. oben und unten, noch ei Stück weit darüber hinaus den Öffnungsquerschnitt des Hohlraums 28 ausfüllt. In diesem Fall wird zweckmäßig ein solcher Dämmschaum gewählt, dessen Porenwände durch Druck leicht zerstört oder zusammengedrückt werden können, so daß er das Einführen der Hakenzungen 38 in die Längsschlitze 36 nicht behindert

Alternativ und bevorzugt erfolgt das Ausschäumen des Hohlraums 28 mit dem Dämmstoff 70 nach dem Anbringen der Führungsschiene 10 durch zwei oder mehrere oberhalb und unterhalb der Führungsschiene 10 im Innenblech 24 vorgesehene Einspritzöffnungen (nicht dargestellt), die nach dem Anbringen der Türsäulenverkleidung 6 hinter dieser verborgen sind.

## Patentansprüche

1. Vorrichtung zur stufenweisen Höhenverstellung eines Halte- oder Umlenkbeschlags eines Sicherheitsgurts an einem hohlen Karosserieteil eines Kraftfahrzeugs, insbesondere an einer B- oder C-Säule, mit einer ortsfest am Karosserieteil angebrachten Führungsschiene, einem entlang der Führungsschiene verschiebbaren und in definierten Verstellpositionen fixierbaren Schlitten mit einer Befestigungseinrichtung für den Halte- oder Umlenkbeschlag, sowie schalldämmendem Material zur Dämpfung von Verstellgeräuschen, **dadurch gekennzeichnet**, daß das schalldämmende Material (70) innerhalb des hohlen Karosserieteils (8) angeordnet ist.

2. Vorrichtung nach Anspruch 1, **dadurch gekennzeichnet**, daß sich das schalldämmende Material (70) mindestens über die gesamte Länge der Führungsschiene (10) durch das hohle Karosserieteil (8) erstreckt.

3. Vorrichtung nach Anspruch 1 oder 2, **dadurch gekennzeichnet**, daß das schalldämmende Material (70) den Öffnungsquerschnitt des hohlen Karosserietells (8) vollständig ausfüllt.

4. Vorrichtung nach einem der Ansprüche 1 bis 3, **dadurch gekennzeichnet**, daß im wesentlichen der gesamte, vom Karosserieteil (8) umschlossene Hohlraum (28) mit dem schalldämmenden Material (70) gefüllt ist.

5. Vorrichtung nach einem der Ansprüche 1 bis 4, **dadurch gekennzeichnet**, daß das schalldämmende Material ein nach der Fertigstellung in das hohle Karosserieteil (8) injizierter Dämmschaum (70) ist.

6. Vorrichtung nach Anspruch 5, **dadurch gekennzeichnet**, daß der Dämmschaum (70) ein Polyurethanschaum ist.

7. Vorrichtung nach Anspruch 5 oder 6, **dadurch gekennzeichnet**, daß das Befestigungsblech (24) mindestens eine Öffnung zum Injizieren des Dämmschaums (72) aufweist.

8. Vorrichtung nach Anspruch 7, **dadurch gekennzeichnet**, daß die Öffnung oberhalb und/oder unterhalb der Führungsschiene (10) angeordnet ist.

9. Vorrichtung nach Anspruch 7, **dadurch gekennzeichnet**, daß die Öffnung (72) hinter der Führungsschiene (10) angeordnet ist.

10. Kraftfahrzeug mit einer Vorrichtung nach einem der vorangehenden Ansprüche.
